Europäisches Patentamt

European Patent Office

Office européen des brevets

(19)

(11) **EP 0 430 457 B1**

(12) **EUROPEAN PATENT SPECIFICATION**

(45) Date of publication and mention
of the grant of the patent:
**08.01.1997 Bulletin 1997/02**

(51) Int Cl.⁶: **G11B 20/10**

(21) Application number: **90312142.4**

(22) Date of filing: **06.11.1990**

(54) **Method and apparatus for qualifying data pulses in a raw data signal produced by a magnetic transducer**

Verfahren und Gerät zur Qualifizierung der Datenpulse in einem durch einen magnetischen Kopf wiedergegebenen Signal der Datenfolge

Méthode et appareil pour la qualification des impulsions de données dans un signal de suite de données, reproduit par un transducteur magnétique

(84) Designated Contracting States:
**DE FR GB IT NL**

(30) Priority: **20.11.1989 US 439559**

(43) Date of publication of application:
**05.06.1991 Bulletin 1991/23**

(60) Divisional application: **96201401.5**

(73) Proprietor: **SEAGATE TECHNOLOGY INTERNATIONAL**
**Georgetown, Grand Cayman Island (KY)**

(72) Inventors:
• **Cronch, Robert D.**
**Oklahoma City, Oklahoma 73120 (US)**
• **Koudele, Larry J.**
**Louisville, Colorado 80027 (US)**

(74) Representative: **Sturt, Clifford Mark et al**
**J. MILLER & CO.**
**34 Bedford Row,**
**Holborn**
**London WC1R 4JH (GB)**

(56) References cited:
**DE-A- 3 724 572          US-A- 4 626 933**
**US-A- 4 634 896**

• **IEEE TRANSACTIONS ON MAGNETICS vol. MAG23, no. 5, September 1887, NEW YORK pages 3675-3677; Y.OUCHI AND H.AOI: 'A new signal detection method with two slice levels'**

## Description

The present invention relates to a method and apparatus for qualifying data peaks in a raw data signal produced by a magnetic transducer. More particularly, the present invention relates to qualifying valid data peaks occurring in a raw data signal produced by a magnetic head used in a magnetic tape or disk drive storage device.

In a magnetic storage system such as a computer disk drive, digital information is magnetically stored at the surface of the disk. Digital information is represented by selectively polarising consecutive areas across the surface of the rotating magnetic disk. When this information is read back from the storage disk, the magnetic polarisation of the medium is sensed and converted into an electrical output signal, i.e. the raw data signal. The raw data signal is representative of the relative strength of the magnetic flux density present on the magnetic disk. This reading and writing operation is accomplished through a magnetic read/write head.

It is highly desirable to provide high levels of information storage densities on the magnetic disk.

One design criteria in a recording system is to provide an areal density as high as possible for the recording surface without compromising the performance of the system. Unfortunately, increased storage densities lead to significant noise levels in the raw data output signal. The source of this noise signal may include irregularities in the disk surface and the electro-magnetic noise associated with proximate electrical devices. Furthermore, high density data coding schemes, such as the 1, 7 code, may further increase the susceptibility of the raw data output signal to unwanted noise. The 1, 7 code employs a single zero magnetic flux cell between any two adjacent flux cells and no more than seven adjacent flux cells. Codes that employ wide "windows" in order to increase disk capacity have larger band widths and longer base lines leading to noise and cross talk susceptibility. This noise problem may be further exacerbated if the magnetic read head drifts slightly off track.

Data coding schemes, which are intended to increase disk capacity and which have a minimum pulse separation of one, provide reduced amplitude levels in closely spaced pulses due to inter-symbol interference. This decreases the signal to noise ratio, which forces the pulse qualification level to be lowered, and further adds to the off track noise problem.

Simple pulse qualification, in which the first peak over a threshold is taken to be the location of the data "pulse" is no longer adequate. The qualification level typically has been set so that there are an equal number of "drop outs" and; an equal number of "extra" pulses due to the noise present in the raw data output signal. Coding schemes directed towards increased data densities, however, can be expected to have significantly more occasions where there are multiple peaks occurring above the lowered qualification threshold and/or peaks located in the long base line between widely separated pulses. Threshold detectors used to disqualify data peaks whose amplitude does not exceed a prescribed level are not adequate to disqualify false data peaks when the ratio between the signal level and the noise level is small. A "first peak" qualification can be expected to place many pulse locations outside the proper window. Not only does this cause data decoding problems, it also causes the phase lock loop used in the read back circuitry to "jitter".

DE-A-3 724 572 discloses a system for qualifying data read from a magnetic recording device. Plural threshold levels are used simultaneously for a reproduced analogue signal to produce a plurality of gate signals corresponding to the threshold levels. It is judged on the basis of the gate signals whether each portion of the reproduced waveform is correct or not when producing a digital output.

US-A-4 634 896 discloses a system for qualifying data read from a magnetic recording device. One positive threshold value and one negative threshold value are employed in the system for eliminating all but the last of a series of peaks in the data.

The present invention seeks to provide improved qualification of the data peak signals produced by a magnetic read/write head during the read operation.

According to one aspect of the present invention, there is provided a method of qualifying data peaks in a raw data signal produced by a magnetic transducer, comprising: amplifying the raw data signal and providing an amplified data signal; providing at least two positive threshold reference levels and at least two negative threshold reference levels; outputting a polarity low output having a logic state which changes from a first state to a second state when the amplitude of the amplified raw data signal exceeds a lower one of said positive threshold levels, and from the second state to the first state when the amplitude exceeds a lower one of said negative threshold levels, each period between a change of states constituting a polarity cycle; outputting a polarity high output having a logic state which changes from a first state to a second state when the amplitude of the amplified raw data signal exceeds a higher one of said positive threshold levels, and from a second state to the first state when the amplitude exceeds a higher one of said negative threshold levels; outputting an encoded pulse data output comprising encoded data pulses representative of the occurrence of the first peak in each polarity cycle having an amplitude which exceeds the lower one of said positive threshold levels or a lower one of said negative threshold levels, and subsequent peaks in the polarity same cycle that have an amplitude which exceeds the amplitude of the highest of the preceding peaks in the polarity cycle; receiving the encoded pulse data output, the polarity high output and the polarity low output and inputting those encoded data pulses of said encoded pulse data which occur when the polarity low output and the polarity high output both have the first state or both have the second state to a phase locked loop in order to synchronise all the encoded pulse data and thereby generate a synchronised pulse data output representing synchronised data pulses and a clock output; providing a clocked polarity output by clocking the polarity low output according to the encoded pulse data; receiving the sync pulse data output, the clock output and the clocked polarity output and providing a gated sync pulse output representing an occurrence of the last synchronised data pulse which occurs during each polarity cycle of the raw data signal.

According to another aspect of the present invention, there is provided apparatus for qualifying data peaks in a raw data signal produced by a magnetic transducer in a magnetic data storage system, the apparatus comprising: an automatic gain control stage circuit coupled to the magnetic transducer for receiving the raw data signal and for outputting an amplified raw data signal; threshold detect means, for receiving the amplified raw data signal from the automatic gain control stage, having at least two positive threshold reference levels and at least two negative threshold reference levels, and providing a polarity low output having a logic state which changes from a first state to a second state when the amplitude of the amplified raw data signal exceeds a lower one of said positive threshold levels, and from the second state to the first state when the amplitude exceeds a lower one of said negative threshold levels, each period between a change of states constituting a polarity cycle and a polarity high output having a logic state which changes from a first state to a second state when the amplitude of the amplified raw data signal exceeds a higher one of said positive threshold levels, and from the second state to the first state when the amplitude exceeds a higher one of said negative threshold levels, for generating an encoded pulse data output comprising encoded data pulses representative of the occurrence of the first peak in each polarity cycle having an amplitude which exceeds the lower one of said positive threshold levels or a lower one of said negative threshold levels, and subsequent peaks in the same polarity cycle that have an amplitude which exceeds the amplitude of the highest of the preceding peaks in the polarity cycle; separator means comprising a phase locked loop and being for receiving the encoded pulse data output, the polarity high output and the polarity low output from the threshold detect means, said separator means inputting those encoded data pulses of said encoded pulse data which occur when logic states of the polarity low output and the polarity high output are the same to the phase locked loop in order to synchronise all the encoded pulse data and thereby generate a synchronised pulse data output representing synchronised data pulses and a clock output; a flip flop having a D input connected to the polarity low output of the threshold detecting means, a clock input connected to the encoded pulse data output of the threshold detecting means, and a Q output for providing a clocked polarity output; and logic means for receiving the sync pulse data output, the clock output and the clocked polarity output, and for providing a gated sync pulse output representing an occurrence of the last synchronised data pulse which occurs during each polarity cycle of the raw data signal.

In a preferred embodiment, the method comprises selecting the first highest peak in the raw data signal after the data signal has passed a certain minimum qualification threshold. The minimum qualification threshold is lowered to avoid most drop outs (due to the reduced amplitude signal provided in high density code schemes, such as the 1, 7 code). Problems associated with the increased number of "extra" pulses are eliminated by recognising only the highest peak. The highest peak will generally occur within the proper window.

There may be provided apparatus for qualifying data peaks in a raw data signal produced by a magnetic transducer, the raw data a signal having a polarity cycle, the apparatus including a peak detector arranged to receive the raw data signal and detect peak levels in the raw data signal, means for detecting the polarity cycle in the raw data signal, and means connected to the peak detector and the means for detecting the polarity cycle for selecting the first highest peak occurring in the raw data signal during a polarity cycle.

The peak detector may, for example, comprise a transistor for charging a capacitor, followed by a comparator. In one embodiment described below, the capacitor voltage charges to the highest peak level through the transistor and is re-set at the start of each window. Logic is then provided to determine when the highest peak has been found and to output a corresponding data pulse. This logic is arranged to introduce a delay into the circuitry and, in order to keep a phase lock loop in synchronisation, only pulses occurring over a higher threshold level are sent to the phase lock loop phase detector. This may result in a number of drop outs in relation to the phase lock loop. However, phase lock loops are inherently less susceptible to drop outs than to wrongly located pulses. A reduced threshold level may be used in the data pulse qualification circuitry.

The location of the first highest peak in the raw data output signal may also be determined using a tri-level qualification arrangement. Each peak in the raw data signal triggers a set of flip flops whose inputs are tied to a set of comparators, each having a corresponding qualification level to produce a total of three thresholds. By the pattern of flip flop settings, logic can determine where the data peaks occurred, their relative level and the location of the true peak in the raw data signal based upon the location of the first highest peak.

The present invention is of particular use with coding schemes having large band widths and long base lines, such as in a high density coding scheme. The present invention improves the qualification of the data signal by reducing susceptibility to noise and to cross talk, which may particularly be a problem if the magnetic read head is slightly off track.

The invention is described further, by way of example, with reference to the accompanying drawings, in which:-

Figure 1 is a graphic illustration of the relationship between the encoding pulse data signal, the raw data output signal and the qualified data pulse output signal in a system using a first peak threshold qualification method;

Figure 2 is a block diagram of qualification circuitry according to the present invention;

Figure 3 shows graphically the relationship between voltage and time at various locations in the circuitry of Figure 2;

Figure 4 is a schematic view of a peak detector of the circuitry of Figure 2;

Figure 5 is a detailed block diagram showing shift register logic of the circuitry of Figure 2;

Figure 6 is a timing diagram for the shift register logic of Figure 5;

Figure 7 is an example of a bit pattern in the shift register logic of Figure 5;

Figure 8 is a block diagram of tri-level qualification circuitry according to the present invention; and

Figure 9 shows a raw data signal along with a timing diagram for the tri-level qualification circuitry of Figure 8.

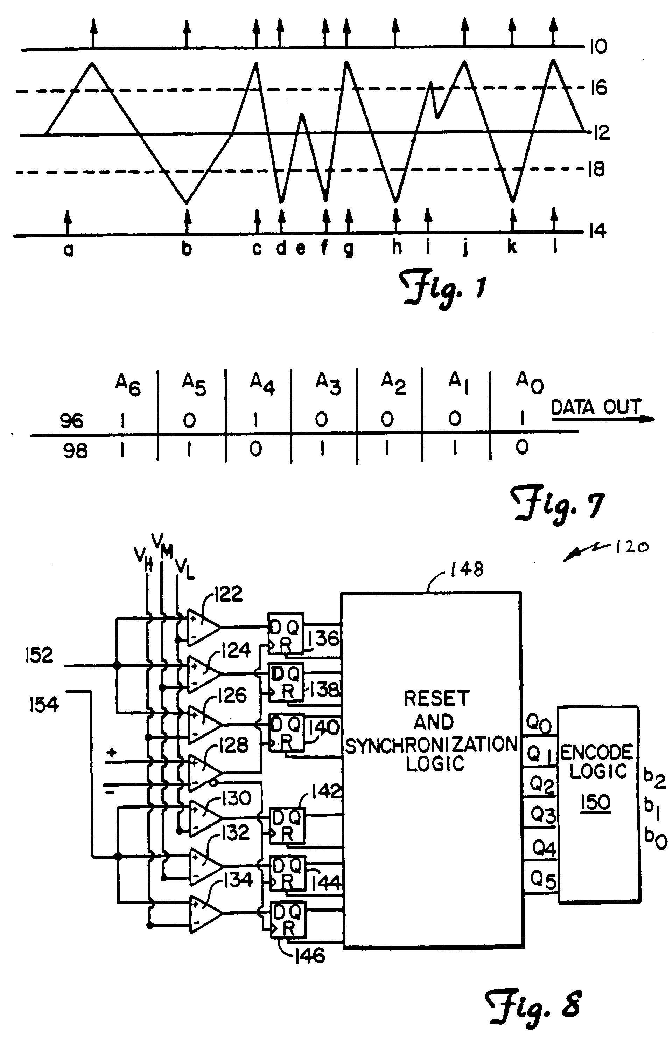

Figure 1 shows graphically an encoding pulse data signal 10, the corresponding raw data signal 12 and a qualified output signal 14, in which qualification is based upon the known detection of the first peak of a given polarity above a qualification level. The dashed lines shown as 16 and 18 represent positive and negative voltage thresholds used to qualify the raw data signal 12.

Figure 1 illustrates the problems associated with the prior art first peak threshold qualification method. In Figure 1, twelve points, labelled $\underline{a}$ to $\underline{l}$, are each associated with a different point in time relating to the signal 14. Points $\underline{e}$, $\underline{i}$ and $\underline{j}$ are of particular interest. Point $\underline{e}$ represents what is referred to as a "drop out", in which the raw data signal produced from the information stored on the magnetic storage medium is too weak to reach the voltage thresholds (16 and 18) and trigger the output signal 14. Thus, a data pulse has been lost, which should have occurred at point $\underline{e}$ in the signal 14 of Figure 1. This drop out may, for example, be due to an irregularity in the surface of the storage medium.

The point labelled $\underline{i}$ in the signal 14 of Figure 1 represents the occurrence of an extra pulse produced where the signal 12 has a first peak extending above the upper threshold 16. The first peak qualification scheme demonstrated in Figure 1 mistakenly identifies this first peak as the location of the true data pulse, when the correct location for the data pulse is shown at point j in Figure 1.

In the present invention, the qualification level used in qualifying the raw data signal may be lowered such that drop outs (for example point $\underline{e}$ in Figure 1) are less likely to occur. Furthermore, the present invention avoids false triggering by an extra pulse as, for example, at point $\underline{i}$ in Figure 1.

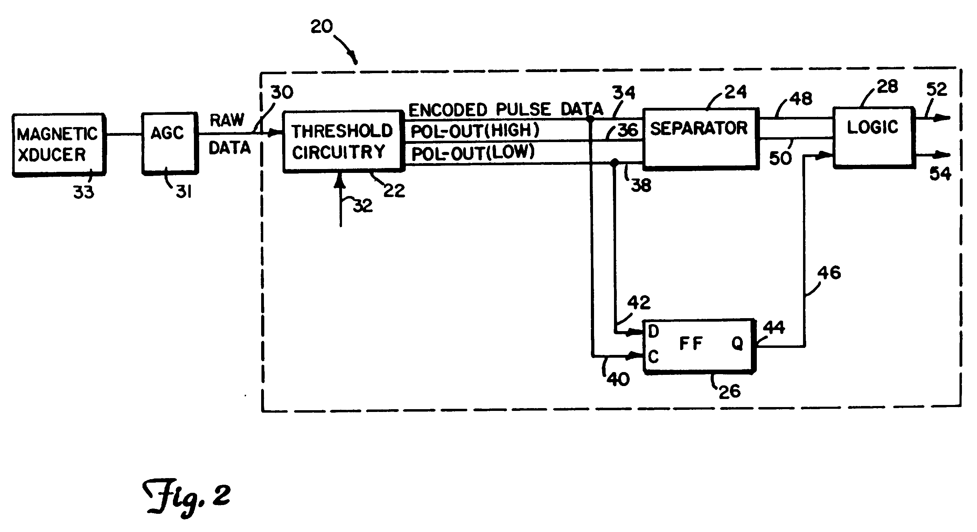

Figure 2 shows in block diagram 20 one embodiment of the present invention, which includes threshold circuitry 22, a separator 24, a flip flop 26, and logic 28. The threshold circuitry 22 preferably includes a pulse detector, a low level gate and polarity detector circuitry (not shown). The separator 24 includes a phase lock loop (not shown) for circuit timing. The logic 28 includes shift registers (not shown) for identifying the location of the highest peak in a raw data signal as explained below in more detail. The flip flop 26 preferably is a D-type flip flop.

The threshold circuitry 22 receives the raw data signal over a line 30 from an automated gain control circuit 31, which acts on a signal developed by a magnetic transducer 33. The threshold circuitry 22 also receives a threshold voltage reference on a threshold voltage reference line 32. The threshold circuitry 22 provides three outputs, namely encoded pulse data on a line 34, a polarity out (high) signal on a line 36 and a polarity out (low) signal on a line 38, each received by the separator 24. The flip flop 26 is connected to the encoded pulse data line 34 at its clock input 40 and to the polarity out (low) line 38 at its D input 42. The flip flop 26 has its Q output 44 connected to a clock polarity line 46. The separator 24 provides outputs to a sync pulse line 48 and a read clock line 50 connected to the logic 28. The logic 28 also receives on the clocked polarity line 46 a clocked polarity signal from the Q output 44 of the flip flop 26. The logic 28 provides outputs to a gated sync pulse data line 52 and a clock line 54.

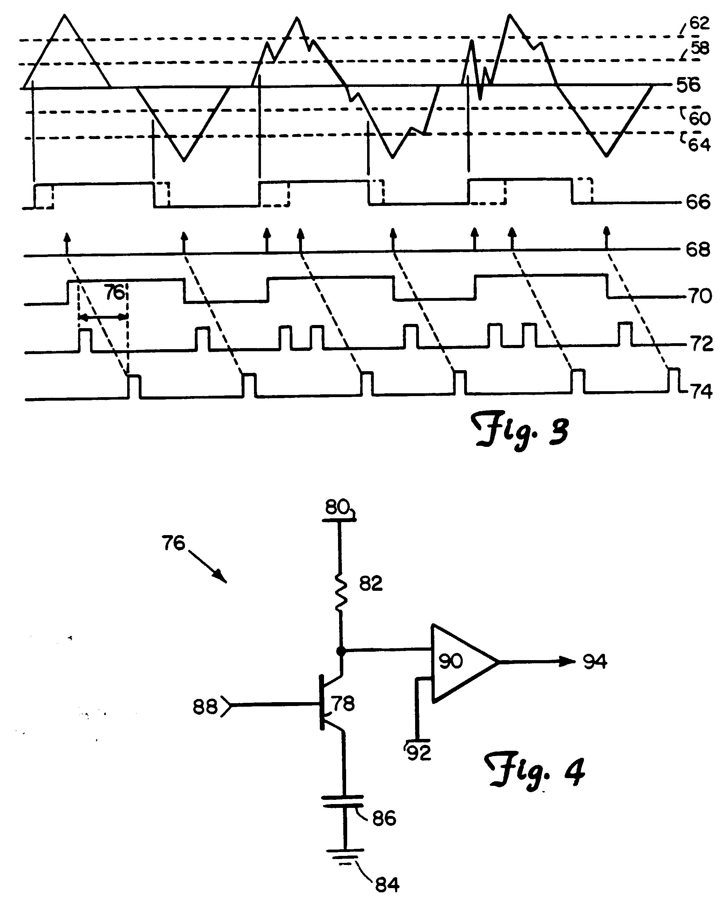

Figure 3 is a logic timing diagram for the block diagram 20 during operation. Graph 56 shows the raw data signal carried on the line 30 of Figure 2. Positive and negative low level voltage thresholds are shown by dashed lines 58 and 60, respectively, in the graph 56 of Figure 3. Positive and negative high level voltage thresholds are shown by dashed lines 62 and 64, respectively, in the graph 56. These voltage threshold levels are generated from the voltage provided on the voltage threshold reference line 32 in Figure 2. A graph of the polarity out (low) signal is shown by the solid line and the graph of the polarity out (high) signal is shown by the dashed line in graph 66 of Figure 3. The two polarity out signals are taken from the polarity out (high) line 36 and the polarity out (low) line 38, respectively. Graph 68 shows a plot of the encoded pulse data carried on the line 34 of Figure 2. Graph 70 shows the clocked polarity signal provided by the flip flop 26 on the clocked polarity line 46. The sync pulse data taken from the sync pulse line 48 is shown in graph 72. The gated sync pulse data provided by the logic 28 taken from the gated sync pulse data line 52 is shown in graph 74.

The raw data signal provided by the line 30 has been amplified through the automatic gain control circuit 31 such that the raw data signal may trigger the threshold circuitry 22. The voltage threshold level may be set by adjusting the voltage provided to the threshold circuitry 22 by the voltage threshold reference line 32. Varying the voltage on the reference line 32 correspondingly varies the threshold levels 58 to 64 shown in the graph 56. Two polarity signals are shown in the graph 66, the solid line being generated using the positive and negative low level voltage thresholds 58

4

and 60 and the dashed line being generated using the positive and negative high level voltage thresholds 62 and 64. The encoded data signal shown in the graph 68 is generated by the threshold circuitry 22 using standard dV/dt and zero cross detection such that only signals having the proper polarity of zero cross detection can cause an encoded data pulse on the line 34. Furthermore, a method of peak detection is employed that allows only peaks of monotonically increasing amplitude to generate the encoded pulse data of the graph 68. This monotonically increasing peak detection occurs within any given constant polarity interval.

The encoded pulse data and polarity information is sent to a standard phase lock loop and data separator in the separator 24, followed by shift registers and gating logic in the logic 28. This circuitry removes all but the last sync pulse in any constant polarity interval.

Since only monotonically increasing pulses within a data window are represented on the encoded pulse data line 34, by providing gated sync pulses on the gated sync pulse data line 52 corresponding only to the last pulse on the encoded pulse data line 34 within a pulse polarity window, only will the highest level occurring within that window be represented on the gated sync pulse data line 52.

Only encoded pulse data in which both the polarity out (high) line 36 and the polarity out (low) line 38 are in the same high or low state is used by the phase lock loop as phase detector information. This eliminates bad phase information caused by lower data peaks triggering an encoded data pulse. All encoded pulse data, however, is used by the data separator 24 and re-timed into synchronised pulse data. The shift registers and the logic 28 introduce a delay shown by time delay 76 in Figure 3 in the gated sync pulse data shown in the graph 74.

Figure 4 shows a schematic diagram of peak detector circuitry 76, including a transistor 78, used in the threshold circuity 22 of Figure 2. The collector of the transistor 78 is connected to a supply voltage 80 through a resistor 82. The emitter of the transistor 78 is connected to electrical ground 84 through a capacitor 86. The base of the transistor 78 receives the raw data signal from the automated gain control circuit 31 by way of an input 88. A peak detector 90 is connected to the collector of the transistor 78 and to a voltage reference 92 and provides an output 94. The peak detector 90 and the transistor 78 are used to detect monotonically increasing peaks in the data signal from the input 88.

The raw data signal shown in the graph 56 of Figure 3 contains numerous peaks. The transistor 78 and peak detector 90 operate in combination to produce a data pulse signal having pulses representing only those peaks in the raw data signal shown in graph 56 that are monotonically increasing within a given polarity range above or below the corresponding positive or negative low level voltage threshold 58 or 60. Thus, those peaks not reaching the minimum threshold 58 or 60 do not produce a corresponding data pulse at the output 94 of the peak detector 90.

The peak detection circuitry 76 includes the capacitor 86, which holds a charge indicative of the highest signal value provided at the input 88. As the signal of the input increases, the transistor 78 conducts to charge the capacitor 86. At a peak, the transistor 78 will conduct only if the signal at the input 88 has a magnitude exceeding the prior input signal magnitude within a given polarity window in the raw data signal. Thus, signal peaks in the graph 56 of Figure 3, which are not as great as the prior peaks, will not generate a pulse at the output 94 of the peak detector 90 (shown in the graph 68 of Figure 3). The peak detector circuitry 76 is re-set upon a polarity window reversal in the raw data signal.

The threshold circuitry 22 provides the separator 24 with the output 94, comprising the encoded pulse data on the line 34, along with the polarity output (high) and (low) signals on the lines 36 and 38, respectively.

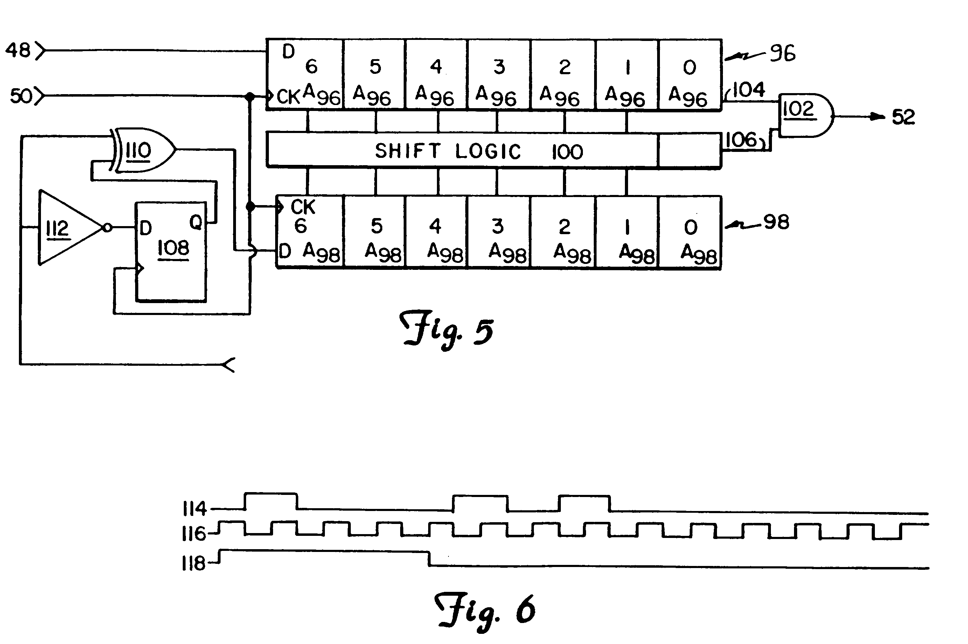

Figure 5 shows a more detailed circuit diagram of the logic 28 shown in Figure 2. The logic 28 includes shift registers 96 and 98 connected to shift logic 100. The shift register 96 is a shift register for the data and the shift register 98 is a shift register for the polarity signals. An AND gate 102 is connected to a data output 104 of the data shift register 96 and an enable output 106 of the shift logic 100. Clock inputs of the data shift register 96 and the polarity shift register 98 receive clock pulses from the read clock line 50 in Figure 2. Data is loaded into the data shift register 96 from the sync pulse line 48. Data for the polarity shift register 98 is generated from the signal provided by the flip flop 26 on the clocked polarity line 46 using a flip flop 108, an exclusive OR gate 110 and an inverter 112.

The polarity shift register 98 receives binary "1"s for positive, and binary "0"s for negative, polarities. Similarly, data on the sync pulse line 48 from the separator 24 is loaded into the data shift register 96. The two shift registers 96 and 98 are clocked at the same rate using the clock pulses on the read clock line 50. The clock rate is derived from the phase lock loop in the separator 24. The shift logic 100 operates in conjunction with both the data shift register 96 and the polarity shift register 98. The shift logic 100 locates the last pulse in the sequence of read pulses provided on the sync pulse data line 48 occurring before a transition in the polarity pulses provided on the clocked polarity line 46. The shift logic 100 then masks out all data pulses in the data shift register 96 occurring within the same polarity period as derived from the polarity shift register 98, except for the last data pulse in the sequence. This is done by selectively activating the enable output 106 of the shift logic 100 connected to the AND gate 102 as pulse data is clocked through the data shift register 96 by clock pulses on the read clock line 50. This last data pulse represents the first highest peak achieved by the raw data signal input to the threshold circuitry 22 within a given polarity cycle for the raw data signal.

The output of the AND gate 102 is shown in the graph 74 of Figure 3, showing that only the chronologically last data pulse provided on the encoded pulse data line 34 is transferred through the logic 28 to the gate sync output 52 within a given polarity zone in the raw data signal.

The gated sync output 52 of the data shift register 96 may then be processed through a phase comparator (not shown) and phase lock loop (not shown) to recover the data and the clock signals.

The logic 28 comprising the data shift register 96, the shift logic 100 and the phase shift register 98 introduces a time delay into the circuit. In order to keep the phase lock loop in synchronisation, only pulses occurring over the high level threshold (62 and 64 in Figure 3) are sent to the phase lock loop phase detector. This may result in a number of "drop outs" in relation to the phase lock loop, but such circuits are inherently less sucsceptible to drop outs than to wrongly located pulses. This problem is improved by using high and low level thresholds (58 to 64) as shown in Figure 3. The data lines 36 and 38 carry high and low threshold information to the phase lock loop (not shown) in the separator 24. Only encoded pulse data (shown in the graph 68 of Figure 3) in which both the high and low threshold lines 36 and 38 are in the same state is used by the phase lock loop for phase detector information. This is to eliminate bad phase information caused by the lower peaks that may deliver encoded pulse data on the line 34. All pulse data shown graphically in the graph 68 of Figre 3, however, is used by the monotonic peak detection circuitry.

This circuitry improves off track performance especially when used with high density codes, such as the 1, 7 code, in which a long base line and low resolution can occur simultaneously. The use of the shift registers 96 and 98 allow as much look ahead as is desired depending only upon the capacity of the shift registers. The circuitry can look ahead all the way to the next adjacent polarity peak. This memory feature is a distinct advantage over methods that employ only true pulse to pulse detection. The circuitry, however, must be robust enough to tolerate the delay introduced due to the shift registers 96 and 98. For the 1, 7 code, this delay will have a worst case duration of 4.66 data bits.

In Figure 6, a logic diagram is shown for the logic circuit 28 of Figure 5. The sync pulse signal is shown as the graph 144, the clock signal from the line 54 is shown as the graph 116, and the clocked polarity signal from the line 46 is shown as the graph 118. The clocked polarity signal in the graph 118 always changes state prior to a sync pulse in the sync pulse signal of the graph 114. Due to circuit design this will always be the case. The rising edge of the clock signal in the graph 116 will shift both the polarity information and the data into the shift registers 96 and 98, respectively. The data shift register 96 contains a logic level "1" whenever a flux reversal has been detected. The polarity shift register 98 contains a logic level "1" normally and a level "0" whenever a polarity change has occurred in the raw data signal. The overall operation of the shift registers 96 and 98 and the shift logic 100 serves to provide a data output only for the last flux reversal in a given polarity zone in the raw data signal. An flux reversals of the same polarity occurring earlier in time will be eliminated.

Using the shift registers 96 and 98 and the shift logic 100, this pulse elimination is accomplished by the following rules:

(1) A "0" in the polarity shift register 98 indicates that the polarity of the corresponding data in the data shift register 96 has changed.

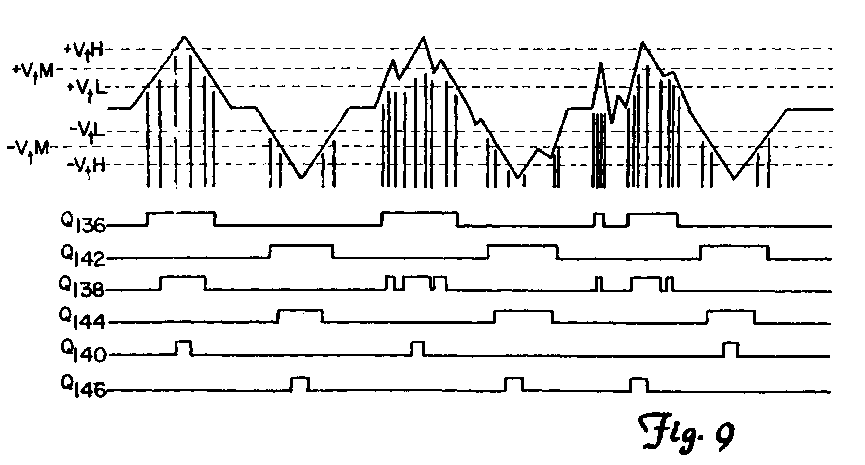

(2) A "1" in a location of the data shift register 96 indicates a flux reversal location. If there is a "0" in the corresponding polarity shift register 98 location, the actual polarity changed prior to that flux reversal occurrence. Therefore, when referring to the data shown in Figure 7, the data shift register 96 locations $A_1$ and $A_4$ are of different polarities, but the data locations $A_4$ and $A_6$ are of the same polarity.

(3) When a "1" in the data shift register 96 reaches the $A_6$ location, all following "1"s in the shift register 96 are compared in the shift register 96 with their own polarity location in the polarity shift register 98 and those polarity locations up to and including the location of the "1" in the data shift register 96. If all of these "1"s see at least a single polarity change (indicated by a "0"), then the "1" in the location $A_o$ is sent out as data. If any of the following "1"s in the data shift register 96 do not see a proceeding "0", the data in the location $A_o$ must be the same polarity as another later "1" and it is eliminated by the AND gate 102.

Mathematically this may be shown with the following Boolean equation:-

$$\overline{\text{Enable}} = (A_{96}1 \times A_{98}1) + [A_{96}2 \times A_{98}1 \times A_{98}2)] +$$

$$[A_{96}3 \times (A_{98}1 \times A_{98}2 \times A_{98}3)] \ldots +$$

$$[A_{96}6 \times (A_{98}1 \times A_{98}2 \times A_{98}3 \times A_{98}4 \times A_{98}5 \times A_{98}6)]$$

where $A_{96}1$ to $A_{96}6$ represent the data locations 1 to 6 in the data shift register 96 and $A_{98}1$ to $A_{98}6$ represent the locations of data stored in the phase shift registers 98.

The location of the highest peak during a period of the raw data cycle may be detected using a tri-level qualification scheme. Each peak triggers a set of flip flops whose inputs are tied to a set of comparators, each comparator having a qualification voltage reference level as one input and the raw signal as the other input. The output of these comparators triggers the flip flops. The shape of the raw data signal determines the state of the flip flops such that by detecting the pattern of the settings of the flip flops, logic can determine which trigger was caused by the highest read signal.

This logic introduces a time delay into the circuit. In order to keep the phase lock loop in sync, only pulses occurring over the medium qualification threshold of the three threshold levels are sent to the phase lock loop detector. This may still result in a number of "drop outs" in relation to the phase lock loop, but phase lock loop circuits are inherently less susceptible to drop outs than to wrongly located pulses.

Figure 8 shows tri-level detection circuitry 120. The circuitry 120 includes comparators 122 to 134 and D-type flip flops 136 to 146. The tri-level detection circuitry 120 also includes re-set and synchronisation logic 148 and encoder logic 150. The raw data signal from the automatic gain control 31 is applied to inputs 152 and 154 which are connected to the non-inverting inputs of the comparators 122 to 134. Tri-level threshold voltages $V_{tH}$, $V_{tM}$ and $V_{tL}$ are applied to the inverting terminals of the comparators 122 to 134. $V_{tH}$ represents the high level voltage threshold and is supplied to the inverting terminals of the comparators 126 and 134. $V_{tM}$ represents the mid-level voltage threshold and is supplied to the inverting inputs of the comparators 124 and 132. $V_{tL}$ represents the low level voltage threshold and is supplied to the inverting inputs of the comparators 122 and 130. The inputs of the comparator 128 receive voltage signals representing the zero crossing of the derivative of the raw data signal provided from a magnetic sensor (not shown). Inverted and non-inverted outputs of the comparator 128 provide the clocking signal used by the flip flops 136 to 146. The D inputs of the flip flops 136 to 146 are connected to the outputs of the comparators 122 to 134. The Q outputs of the flip flops 136 to 146 are connected to the re-set and synchronisation logic 148. Reset inputs for the comparators 136 to 146 are also connected to the re-set and synchronisation logic 148. The re-set and synchronisation logic 148 provides binary outputs on lines Q0 to Q5 in Figure 8 to the encoder logic 150, which provides encoded binary outputs on lines b0 to b2. The inputs of the zero crossing comparator 128 carry voltage information derived using standard methods of differentiation and zero cross detection such that only positive peaks are re-timed onto positive thresholds and only negative peaks onto negative thresholds. Using this technique, each peak in the raw data signal is detected by sensing the zero crossing of the derivative of the raw data signal.

Figure 9 is a graph of the raw data signal from the automatic gain control 31 (see Figure 2) and the corresponding Q outputs of the flip flops 134 to 146. The raw data signal is labelled $V_{152}$ - $V_{154}$ and represents the voltage difference between the inputs 152 and 154 shown in Figure 8. The dashed lines labelled positive and negative $V_{tH}$, $V_{tM}$ and $V_{tL}$ in Figure 9 represent three voltage thresholds used by the tri-level qualification circuitry 120. The outputs of the flip flops 136 to 146 are labelled $Q_{136}$ to $Q_{146}$. $Q_{136}$, $Q_{138}$ and $Q_{140}$ indicate when the raw data signal has exceeded the low voltage threshold, the medium voltage threshold and the high voltage threshold, respectively. The plots labelled $Q_{142}$, $Q_{144}$ and $Q_{146}$ indicate when the raw data signal taken at $V_{152}$ - $V_{154}$ is less than $-V_{tL}$, $-V_{tM}$ and $-V_{tH}$, respectively. The outputs of the flip flops 136 to 146 are connected to the re-set and synchronisation logic 148, which provides a binary representation of each pulse level in the raw data signal provided to the inputs 152 and 154. The re-set and synchronisation logic 148 also re-sets the flips flops 138 to 144 upon completion of a polarity cycle in the raw data signal.

The encoder logic 150 receives the binary signal on the data lines Q0 to Q5 from the logic 148 and provides an encoded output on the data lines b0 to b2. The encoded binary outputs b0 to b2 may then be directed to a controller unit such as a micro-processor (not shown), which produces an output representing the peak in the raw data signal exceeding the greatest of the three thresholds occurring first within a given polarity cycle in the raw data signal. The comparator 128 used to clock the flip flops 136 to 146 causes only the peaks in the raw data signal to be digitised by the comparators 122 to 126 and 130 to 134 and latched by the flip flops 136 to 146, because the input of the comparator 128 receives the signal related to the derivative of the raw data signal and the flip flops 136 to 146 have edge triggered clock inputs. The circuitry causes only positive peaks to bo re-timed onto positive thresholds and only negative peaks to be re-timed onto negative thresholds.

The comparator controlled circuitry of Figure 8 using tri-level peak detection may be particularly useful because the peak detecting algorithm is implemented in computer software. The detection signal may easily be optimised for a given magnetic read back system by prioritising the various combinations of peak threshold levels and their occurrence chronologically within a polarity cycle in the raw data signal from the magnetic head. This versatility provides the ability to optimise the qualification criteria on a system by system basis without repeated re-design of the hardware components.

Only those pulses exceeding the medium level voltage threshold are used as inputs for the phase lock loop (not shown). Pulses exceeding the high and low voltage thresholds are synchronised to the phase lock loop but otherwise have no effect upon phase lock loop operation.

The present invention improves accuracy during read back of information from a magnetic storage medium, such as a magnetic disk. The invention is particularly advantageous for use with high density coding schemes used to increase disk storage capacity. These codes tend to have larger band widths and longer base lines making them more susceptible to noise and cross talk, especially if the magnetic read head is slightly off track. The present invention allows for reduced voltage qualification thresholds, particularly useful in detecting low amplitude raw data signals, such as those in which the minimum pulse separation is low and the amplitude has been reduced to lower the inter-symbol interference. By detecting the first highest peak after the read signal has passed a minimum qualification threshold, and assigning that peak as the real location of the data pulse, it is possible with the present invention to lower the qualification threshold and still avoid problems associated with drop outs.

## Claims

1. A method of qualifying data peaks in a raw data signal produced by a magnetic transducer (33), comprising:

amplifying the raw data signal and providing an amplified data signal (30);
providing at least two positive threshold reference levels (58,62) and at least two negative threshold reference levels (60,64);
outputting a polarity low output (38) having a logic state which changes from a first state to a second state when the amplitude of the amplified raw data signal (30) exceeds a lower one (58) of said positive threshold levels (62.58), and from the second state to the first state when the amplitude exceeds a lower one (60) of said negative threshold levels (60,64), each period between a change of states constituting a polarity cycle;
outputting a polarity high output (36) having a logic state which changes from a first state to a second state when the amplitude of the amplified raw data signal (30) exceeds a higher one (62) of said positive threshold levels (58,62), and from a second state to the first state when the amplitude exceeds a higher one (64) of said negative threshold levels (60,64);
outputting an encoded pulse data output (34) comprising encoded data pulses (68) representative of the occurrence of the first peak in each polarity cycle having an amplitude which exceeds the lower one (58) of said positive threshold levels (58, 62) or a lower one (60) of said negative threshold levels (60, 64), and subsequent peaks in the same polarity cycle that have an amplitude which exceeds the amplitude of the highest of the preceding peaks in the polarity cycle;
receiving the encoded pulse data output (34), the polarity high output (36) and the polarity low output (38) and inputting those encoded data pulses (68) of said encoded pulse data (34) which occur when the polarity low output (38) and the polarity high (36) output both have the first state or the both have the second state to a phase locked loop in order to synchronise all the encoded pulse data (34) and thereby generate a synchronised pulse data output (48, 72) representing synchronised data pulses (72) and a clock output (50);
providing a clocked polarity output (46,70) by clocking the polarity low output (38) according to the encoded pulse data (34);
receiving the sync pulse data output (48), the clock output (50) and the clocked polarity output (46,70) and providing a gated sync pulse output (52,74) representing an occurrence of the last synchronised data pulse which occurs during each polarity cycle of the raw data signal (30).

2. A method as claimed in claim 1 wherein the step of providing gated sync pulse output (52,74) comprises:

shifting synchronised data pulses (72) through a plurality of data locations (6-0) in a data shift register (96) in response to the clock output (50) and providing a data shift register output (104) comprising shifted synchronised data pulses:
shifting the clocked polarity output (46,70) through a plurality of data locations (6-0) in a polarity shift register (98) in response to the clock output (50); and
detecting contents of the plurality of data locations (6-0) of the data shift register (96) and the plurality of data locations (6-0) of the polarity shift register (98) and providing an enable signal (106) to an enable input of an output gate (102) when the data shift register output (104) represents the occurrence of the last synced data pulse during the polarity cycle of the raw data signal (30).

3. A method as claimed in claim 2 wherein the data shift register has a plurality of data locations ($A_{DS}1$, $A_{DS}2$.......... $A_{DS}N$), the polarity shift register has a plurality of data locations ($A_{PS}1$, $A_{PS}2...A_{PS}N$), and the step of providing the enable signal (106) comprises providing an enable signal based upon the following relationship:

$$\overline{Enable} = (A_{DS}1 \times A_{PS}1) + [A_{DS}2 \times (A_{PS}1 \times A_{PS}2)]$$

$$... + [A_{DS}N \times (A_{PS}1 \times A_{PS}2... \times A_{PS}N)]$$

4. Apparatus for qualifying data peaks in a raw data signal produced by a magnetic transducer (33) in a magnetic data storage system, the apparatus comprising:

an automatic gain control stage circuit (31) coupled to the magnetic transducer (33) for receiving the raw data signal and for outputting an amplified raw data signal (30);

threshold detect means (22), for receiving the amplified raw data signal (30) from the automatic gain control stage (31), having at least two positive threshold reference levels (58,62) and at least two negative threshold reference levels (60,64), and providing a polarity low output (38) having a logic state which changes from a first state to a second state when the amplitude of the amplified raw data signal (30) exceeds a lower one (58) of said positive threshold levels (62,58), and from the second state to the first state when the amplitude exceeds a lower one (60) of said negative threshold levels (60,64), each period between a change of states constituting a polarity cycle, and a polarity high output (36) having a logic state which changes from a first state to a second state when the amplitude of the amplified raw data signal (30) exceeds a higher one (62) of said positive threshold levels (58,62), and from the second state to the first state when the amplitude exceeds a higher one (64) of said negative threshold levels (60,64), and for generating an encoded pulse data output (34) comprising encoded data pulses (68) representative of the occurrence of the first peak in each polarity cycle having an amplitude which exceeds the lower one (58) of said positive threshold levels (58, 62) or a lower one (60) of said negative threshold levels (60, 64), and subsequent peaks in the same polarity cycle that have an amplitude which exceeds the amplitude of the highest of the preceding peaks in the polarity cycle;

separator means (24) comprising a phase locked loop and being for receiving the encoded pulse data output (34), the polarity high output (36) and the polarity low output (38) from the threshold detect means (22), said separator means inputting those encoded data pulses (68) of said encoded pulse data (34) which occur when the polarity low output (38) and the polarity high output (36) both have the first state or both have the second state to the phase locked loop in order to synchronise all the encoded pulse data (34) and thereby generate a synchronised pulse data output (48, 72) representing synchronised data pulses (72) and a clock output (50);

a flip flop (26) having a D input (42) connected to the polarity low output (38) of the threshold detecting means (22), a clock input (40) connected to the encoded pulse data output (34) of the threshold detecting means (22), and a Q output (44) for providing a clocked polarity output (46); and

logic means (28) for receiving the sync pulse data output (48), the clock output (50) and the clocked polarity output (46), and for providing a gated sync pulse output (52) representing an occurrence of the last synchronised data pulse which occurs during each polarity cycle of the raw data signal (30).

5. Apparatus according to claim 4, wherein the logic means (28) for providing the gated sync pulse output (52,74) comprises:

a data shift register (96) and means for shifting synchronised data pulses (72) through a plurality of data locations (6-0) in the data shift register (96) in response to the clock output (50) and providing a data shift register output (104) comprising shifted synchronised data pulses;

a polarity shift register (98) and means for shifting the clocked polarity output (46,70) through a plurality of data locations (6-0) in the polarity shift register (98) in response to the clock output (50); and

an output gate (102) and means (100) for detecting the contents of the plurality of data locations (6-0) of the data shift register (96) and the plurality of data locations (6-0) of the polarity shift register (98) and providing an enable signal (106) to an enable input of the output gate (102) when the data shift register output (104) represents the occurrence of the last synced data pulse during the polarity cycle of the raw data signal (30).

6. An apparatus as claimed in claim 5 wherein the data shift register (96) has a plurality of data locations ($A_{DS}1$, $A_{DS}2$...........$A_{DS}N$), the polarity shift register (96) has a plurality of data locations ($A_{PS}1$, $A_{PS}2$...$A_{PS}N$), and enable signal (106) is provided based upon the following relationship:

$$\overline{Enable} = (A_{DS}1 \; x \; A_{PS}1) + [A_{DS}2 \; x \; (A_{PS}1 \; x \; A_{PS}2)]$$

$$... + [A_{DS}N \; x \; (A_{PS}1 \; x \; A_{PS}2... \; x \; A_{PS}N)]$$

**Patentansprüche**

1. Verfahren zur Qualifizierung von Datenspitzen in einem Rohdatensignal, das von einem magnetischen Wandler (33) erzeugt wird, mit den folgenden Schritten:

Verstärken des Rohdatensignals und Lieferung eines verstärkten Datensignals (30);

Schaffung von zumindest zwei positiven Schwellenwert-Bezugspegeln (58, 62) und zumindest zwei negativen Schwellenwert-Bezugspegeln (60, 64);

Ausgabe eines Polarität-Niedrig-Ausgangssignals (38) mit einem Logikzustand, der sich von einem ersten Zustand auf einen zweiten Zustand ändert, wenn die Amplitude des verstärkten Rohdatensignals (30) einen unteren (58) der positiven Schwellenwertpegel (62, 58) überschreitet, und der sich von dem zweiten Zustand auf den ersten Zustand ändert, wenn die Amplitude einen unteren (60) der negativen Schwellenwertpegel (60, 64) überschreitet, wobei jede Periode zwischen einem Wechsel von Zuständen einen Polaritätszyklus bildet;

Ausgabe eines Polarität-Hoch-Ausganges (36) mit einem Logikzustand, der sich von einem ersten Zustand auf einen zweiten Zustand ändert, wenn die Amplitude des verstärkten Rohdatensignals (30) einen höheren (62) der positiven Schwellenwertpegel (58, 62) überschreitet, und der sich von einem zweiten Zustand zu dem ersten Zustand ädnert, wenn die Amplitude einen höheren (64) der negativen Schwellenwertpegel (60, 64) überschreitet;

Ausgabe eines codierten Impulsdatenausganges (34), der codierte Datenimpulse (68) umfaßt, die das Auftreten der ersten Spitze in jedem Polaritätszyklus, die eine Amplitude aufweist, die den unteren (58) der positiven Schwellenwertpegel (58, 62) oder einen unteren (60) der negativen Schwellenwertpegel (60, 64) überschreitet, und nachfolgende Spitzen in dem gleichen Polaritätszyklus darstellen, die eine Amplitude aufweisen, die die Amplitude des höchsten der vorhergehenden Spitzen in dem Polaritätszyklus übersteigt;

Empfangen des codierten Impulsdatenausganges (34), des Polarität-Hoch-Ausganges (36) und des Polarität-Niedrig-Ausganges (38) und Eingabe derjenigen codierten Datenimpulse (68) der codierten Impulsdaten (34), die auftreten, wenn der Polarität-Niedrig-Ausgang (38) und der Polarität-Hoch-Ausgang (36) beide den ersten Zustand oder beide den zweiten Zustand haben, an eine phasenstarre Schleife, um alle codierten Impulsdaten (34) zu synchronisieren und dadurch einen synchronisierten Impulsdatenausgang (48, 72), der synchronisierte Datenimpulse (72) darstellt, und einen Taktausgang (50) zu erzeugen;

Schaffung eines getakteten Polaritätsausganges (46, 70) durch Takten des Polarität-Niedrig-Ausganges (38) entsprechend den codierten Impulsdaten (34);

Empfangen des synchronisierten Impulsdatenausganges (48), des Taktausganges (50) und des getakteten Polaritätsausganges (46, 70) und Lieferung eines torgesteuerten synchronisierten Impulsausganges (52, 74), der ein Auftreten des letzten synchronisierten Datenimpulses darstellt, der während jedes Polaritätszyklus des Rohdatensignals (30) auftritt.

2. Verfahren nach Anspruch 1, bei dem der Schritt der Lieferung des torgesteuerten synchronisierten Impulsausganges (52, 74) folgende Schritte umfaßt:

Verschieben von synchronisierten Daenimpulsen (72) durch eine Vielzahl von Datenplätzen (6-0) in einem Datenschieberegister (96) in Abhängigkeit von dem Taktausgang (50) und Liefern eines Daten-Schieberegister-Ausganges (104), der verschobene synchronisierte Datenimpulse umfaßt;

Verschieben des getakteten Polaritätsausganges (46, 70) durch eine Vielzahl von Datenplätzen (6-0) in einem Polaritäts-Schieberegister (98) in Abhängigkeit von dem Taktausgang (50); und

Feststellung des Inhaltes der Vielzahl von Datenplätzen (6-0) des Daten-Schieberegisters (96) und der Vielzahl von Datenplätzen (6-0) des Polaritäts-Schieberegisters (98) und Lieferung eines Freigabesignals (106) an einen Freigabeeingang eines Ausgangs-Torsteuergliedes (102), wenn der Daten-Schieberegisterausgang (104) das Auftreten des letzten synchronisierten Datenimpulses während des Polaritätszyklus des Rohdatensignals (30) darstellt.

3. Verfahren nach Anspruch 2, bei dem das Datenschieberegister eine Vielzahl von Datenplätzen ($A_{DS}1$, $A_{DS}2$.... $A_{DS}N$), aufweist, während das Polaritäts-Schieberegister eine Vielzahl von Datenplätzen ($A_{PS}1$, $A_{PS}2$.... $A_{PS}N$) aufweist und bei dem der Schritt der Lieferung des Freigabesignals (106) die Lieferung eines Freigabesignals auf der Gundlage der folgenden Gleichung umfaßt:

$$\overline{\text{Freigabe}} = (A_{DS}1 \times A_{PS}1) + [A_{DS}2 \times (A_{PS}1 \times A_{PS}2)]$$

$$... + [A_{DS}N \times (A_{PS}1 \times A_{PS}2 ... \times A_{PS}N)]$$

4. Einrichtung zur Qualifizierung von Datenspitzen in einem Rohdatensignal, das von einem magnetischen Wandler (33) in einem magnetischen Datenspeichersystem erzeugt wird, wobei die Einrichtung folgende Teile umfaßt:

eine automatische Verstärkungssteuerstufenschaltung (31), die mit dem magnetischen wandler (33) gekoppelt ist, um das Rohdatensignal zu empfangen und um ein verstärktes Rohdatensignal (30) abzugeben, Schwellenwert-Detektoreinrichtungen (22) zum Empfang des verstärkten Rohdatensignals (30) von der automatischen Verstärkungssteuerstufe (31), wobei die Schwellenwert-Detektoreinrichtungen (22) zumindest zwei positive Schwellenwert-Bezugspegel (58, 62) und zumindest zwei negative Schwellenwert-Bezugspegel (60, 64) aufweisen und ein Polarität-Niedrig-Ausgangssignal (38) mit einem Logikzustand, der sich von einem ersten Zustand auf einen zweiten Zustand ändert, wenn die Amplitude des verstärkten Rohdatensignals (30) einen unteren (58) der positiven Schwellenwertpegel (62, 58) übersteigt, und der sich von dem zweiten Zustand auf den ersten Zustand ändert, wenn die Amplitude einen unteren (60) der negativen Schwellenwertpegel (60, 64) übersteigt, wobei jede Periode zwischen einer Änderung der Zustände einen Polaritätstyklus darstellt, und ein Polarität-Hoch-Ausgangssignal (36) liefern, das einen Logikzustand aufweist, der sich von einem ersten Zustand auf einen zweiten Zustand ändert, wenn die Amplitude des verstärkten Rohdatensignal (30) einen höheren (62) der positiven Schwellenwertpegel (58, 62) überschreitet, und der sich von dem zweiten Zustand auf den ersten Zustand ändert, wenn die Amplitude einen höheren (64) der negativen Schwellenwertpegel (60, 64) überschreitet, wobei die Schwellenwert-Detektoreinrichtungen (22) weiterhin zur Erzeugung eines codierten Impulsdatenausganges (34) dienen, der codierte Datenimpulse (68) umfaßt, die das Auftreten einer ersten Spitze in jedem Polaritätszyklus mit einer Amplitude, die den unteren (58) der positiven Schwellenwertpegel (58, 62) oder einen unteren (60) der negativen Schwellenwertpegel (60, 64) übersteigt, und nachfolgende Spitzen in dem gleichen Polaritätszyklus darstellen, die eine Amplitude aufweisen, die die Amplitude des höchsten der vorhergehenden Spitzen in dem Polaritätszyklus übersteigt,

Abtrenneinrichtungen (24), die eine phasenstarre Schleife umfassen und zum Empfang des codierten Impulsdatenausganges (34), des Polarität-Hoch-Ausgangssignals (36) und des Polarität-Niedrig-Ausgangssignals (38) von den Schwellenwert-Detektoreinrichtungen (22) dienen, wobei die Abtrenneinrichtungen diejenigen codierten Datenimpulse (68) der codierten Impulsdaten (34), die auftreten, wenn das Polarität-Niedrig-Ausgangssignal (38) und das Polarität-Hoch-Ausgangssignal (36) beide den ersten Zustand oder beide den zweiten Zustand aufweisen, in die phasenstarre Schleife eingeben, um alle codierten Impulsdaten (34) zu synchronisieren und hierdurch einen synchronisierten Impulsdatenausgang (48, 72), der synchronisierte Datenimpulse (72) darstellt, und einen Taktausgang (50) zu erzeugen;

eine Flip-Flop-Schaltung (26) mit einem D-Eingang (42), der mit dem Polarität-Niedrig-Ausgang (38) der Schwellenwert-Detektoreinrichtungen (22) verbunden ist, mit einem Takteingang (40), der mit dem codierten Impulsdatenausgang (34) der Schwellenwert-Detektoreinrichtung (22) verbunden ist, und mit einem Q-Ausgang (44) zur Lieferung eines getakteten Polaritätsausganges (46); und

Logikeinrichtungen (28) zum Empfang des synchronisierten Impulsdatenausganges (48), des Taktausganges (50) und des getakteten Polaritätsausganges (46) und zur Lieferung eines torgesteuerten synchronisierten Impulsausganges (52), der das Auftreten des letzten synchronisierten Datenimpulses darstellt, der während jedes Polaritätszyklus des Rohdatensignals (30) auftritt.

5. Einrichtung nach Anspruch 4, bei der die Logikeinrichtungen (28) zur Lieferung des torgesteuerten synchronisierten Impulsausganges (52, 74) folgende Teile umfassen:

ein Daten-Schieberegister (969 und Einrichtungen zur Verschiebung synchronisierter Datenimpulse (72) durch eine Vielzahl von Datenplätzen (6-0) in dem Daten-Schieberegister (96) in Abhängigkeit von dem Taktausgang (50) und zur Lieferung eines Daten-Schieberegister-Ausganges (104), der verschobene synchronisierte Datenimpulse umfaßt;

ein Polaritäts-Schieberegister (98) und Einrichtungen zum Verschiebenen des getakteten Polaritätsausganges (46, 70) durch eine Vielzahl von Datenplätzen (6-0) in dem Polaritäts-Schieberegister in Abhängigkeit von dem Taktausgang (50); und

ein Ausgangs-verknüpfungsglied (102) und Einrichtungen (100) zur Feststellung des Inhaltes der Vielzahl von Datenplätzen (6-0) des Daten-Schieberegisters (96) und der Vielzahl von Datenplätzen (6-0) des Polaritäts-Schieberegisters (98) und zur Lieferung eines Freigabesignals (106) an einen Freigabeeingang des Ausgangs-Verknüpfungsgliedes (102), wenn der Daten> Schieberegister-Ausgang (104) das Auftreten des letzten synchronisierten Datenimpulses während des Polaritätszyklus des Rohdatensignals (30) darstellt.

6. Einrichtung nach Anspruch 5, bei der das Daten-Schieberegister (96) eine Vielzahl von Datenplätzen ($A_{DS}1$, $A_{DS}2$.... $A_{DS}N$) aufweist, während das Polaritäts-Schieberegister (96) eine Vielzahl von Datenplätzen ($A_{PS}1$, $A_{PS}2$....$A_{PS}N$) aufweist, und bei der das Freigabesignal (106) auf der Grundlage der folgenden Gleichung geliefert wird:

$$\overline{\text{Freigabe}} = (A_{DS}1 \times A_{PS}1) + [A_{DS}2 \times (A_{PS}1 \times A_{PS}2)]$$

$$... + [A_{DS}N \times (A_{PS}1 \times A_{PS}2 ... \times A_{PS}N)]$$

**Revendications**

1. Méthode de qualification des pointes de données dans un signal de données brutes produit par un transducteur magnétique (33), comprenant les étapes consistant à :

   amplifier le signal de données brutes et fournir un signal de données amplifié (30) ;
   fournir au moins deux niveaux positifs de référence de seuil (58, 62) et au moins deux niveaux négatifs de référence de seuil (60, 64) ;
   émettre une faible sortie de polarité (38) présentant un état logique qui passe d'un premier état à un second état lorsque l'amplitude du signal amplifié (30) de données brutes excède une amplitude inférieure (58) desdits niveaux positifs de seuil (62, 58), et du second état au premier état lorsque l'amplitude excède une amplitude inférieure (60) desdits niveaux négatifs de seuil (60, 64), chaque période entre un changement d'état constituant un cycle de polarité ;
   émettre une forte sortie de polarité (36) présentant un état logique qui passe d'un premier état à un second état lorsque l'amplitude du signal amplifié (30) de données brutes excède une amplitude supérieure (62) desdits niveaux positifs de seuil (58, 62), et d'un second état au premier état lorsque l'amplitude excède une amplitude supérieure (64) desdits niveaux négatifs de seuil (60, 64) ;
   émettre une sortie de données codées d'impulsions (34) comprenant des impulsions de données codées (68) représentatives de l'occurrence de la première pointe de chaque cycle de polarité présentant une amplitude qui excède l'amplitude inférieure (58) desdits niveaux positifs de seuil (58, 62) ou une amplitude inférieure (60) desdits niveaux négatifs de seuil (60, 64), et les pointes subséquentes du même cycle de polarité qui présentent une amplitude qui excède l'amplitude de la plus haute des pointes précédentes du cycle de polarité ;
   recevoir la sortie de données d'impulsion codées (34), la forte sortie de polarité (36) et la faible sortie de polarité (38) et l'entrée de ces impulsions de données codées (68) desdites données d'impulsion codées (34) qui se produisent lorsque la faible sortie de polarité (38) et la forte sortie de polarité (36) présentent chacune le premier état ou chacune le second état en circuit à verrouillage de phase de façon à synchroniser toutes les données d'impulsion codées (34) et de générer ainsi une sortie de données d'impulsion synchronisées (48, 72) représentant des impulsions de données synchronisées (72) et une sortie d'horloge (50) ;
   fournir une sortie de polarité synchronisée (46, 70) en synchronisant la faible sortie de polarité (38) selon les données d'impulsion codées (34) ;
   recevoir la sortie de données d'impulsion synchronisées (48), la sortie d'horloge (50) et la sortie de polarité synchronisée (46, 70) et fournir une sortie d'impulsions synchronisées à porte (52, 74) représentant une occurrence de la dernière impulsion de données synchronisée qui se produit au cours de chaque cycle de polarité du signal de données brutes (30).

2. Méthode selon la revendication 1, dans laquelle l'étape consistant à fournir une sortie d'impulsions synchronisées à porte (52, 74) comprend les étapes consistant à :

   décaler les impulsions de données synchronisées (72) à travers une pluralité d'emplacements de données (6-0) dans un registre de décalage de données (96) en réponse à la sortie d'horloge (50) et fournir une sortie d'un registre de décalage des données (104) comprenant des impulsions de données synchronisées décalées ;
   décaler la sortie de polarité synchronisée (46, 70) à travers une pluralité d'emplacements de données (6-0) dans un registre de décalage de polarité (98) en réponse à la sortie d'horloge (50) ; et
   détecter le contenu de la pluralité d'emplacements de données (6-0) du registre de décalage des données (96) et la pluralité d'emplacements de données (6-0) du registre de décalage de la polarité (98) et fournir un signal de validation (106) à une entrée de validation d'une porte de sortie (102) lorsque la sortie du registre de décalage des données (104) représente l'occurrence de la dernière impulsion de données synchronisée au cours du cycle de polarité du signal de données brutes (30).

3. Méthode selon la revendication 2, dans laquelle le registre de décalage des données comporte une pluralité d'emplacements de données ($A_{DS}1$, $A_{DS}2....A_{DS}N$), le registre de décalage de la polarité comporte une pluralité d'emplacements de données ($A_{PS}1$, $A_{PS}2....A_{PS}N$), et l'étape de fourniture du signal de validation (106) comprend la fourniture d'un signal de validation basé sur la relation suivante :

$$\overline{\text{Validation}} = (A_{DS}1 \times A_{PS}1) + [A_{DS}2 \times (A_{PS}1 \times A_{PS}2)]$$

$$... + [A_{DS}N \times (A_{PS}1 \times A_{PS}2... \times A_{PS}N)]$$

4.  Dispositif permettant de qualifier les pointes de données dans un signal de données brutes produit par un transducteur magnétique (33) dans un système magnétique de mémorisation de données, le dispositif comprenant :

    un circuit (31) d'étape de commande automatique de gain couplé au transducteur magnétique (33) permettant de recevoir le signal de données brutes et d'émettre un signal amplifié (30) de données brutes ;
    des moyens de détection de seuil (22) permettant de recevoir le signal amplifié (30) de données brutes de l'étape de commande automatique de gain (31), présentant au moins deux niveaux positifs de référence de seuil (58, 62) et au moins deux niveaux négatifs de référence de seuil (60, 64), et fournissant une faible sortie de polarité (38) présentant un état logique qui passe d'un premier état à un second état lorsque l'amplitude du signal amplifié (30) de données brutes excède une amplitude inférieure (58) desdits niveaux positifs de seuil (62, 58), et du second état vers le premier état lorsque l'amplitude excède une amplitude inférieure (60) desdits niveaux négatifs de seuil (60, 64), chaque période entre un changement d'état constituant un cycle de polarité et une forte sortie de polarité (36) présentant un état logique qui passe d'un premier état à un second état lorsque l'amplitude du signal amplifié (30) de données brutes excède une amplitude supérieure (62) desdits niveaux positifs de seuil (58, 62), et du second état vers le premier état lorsque l'amplitude excède une amplitude supérieure (64) desdits niveaux négatifs de seuil (60, 64), et permettant de générer une sortie de données d'impulsions codées (34) comprenant des impulsions de données codées (68) représentatives de l'occurrence de la première pointe de chaque cycle de polarité ayant une amplitude qui excède l'amplitude inférieure (58) desdits niveaux positifs de seuil (58, 62) ou une amplitude inférieure (60) desdits niveaux négatifs de seuil (60, 64), et des pointes subséquentes du même cycle de polarité qui ont une amplitude qui excède l'amplitude de la plus haute des pointes précédentes du cycle de polarité ;
    des moyens de séparation (24) comprenant un circuit à verrouillage de phase permettant de recevoir la sortie de données d'impulsions codées (34), la forte sortie de polarité (36) et la faible sortie de polarité (38) des moyens de détection de seuil (22), lesdits moyens de séparation entrant ces impulsions de données codées (68) desdites données d'impulsion codées (34) qui se produisent lorsque la faible sortie de polarité (38) et la forte sortie de polarité (36) présentent toutes deux le premier état ou toutes deux le second état en circuit à verrouillage de phase de façon à synchroniser toutes les données d'impulsions codées (34) et à générer ainsi une sortie de données d'impulsions synchronisées (48, 72) représentant des impulsions de données synchronisées (72) et une sortie d'horloge (50) ;
    une bascule (26) comportant une entrée D (42) connectée à la faible sortie de polarité (38) des moyens de détection de seuil (22), une entrée d'horloge (40) connectée à la sortie de données d'impulsions codées (34) des moyens de détection de seuil (22) et une sortie Q (44) permettant de fournir une sortie de polarité synchronisée (46) ; et
    des moyens logiques (28) permettant de recevoir la sortie de données d'impulsions synchronisées (48), la sortie d'horloge (50) et la sortie de polarité synchronisée (46), et permettant de fournir une sortie d'impulsions synchronisées à porte (52) représentant une occurrence de la dernière impulsion de données synchronisée qui se produit au cours de chaque cycle de polarité du signal de données brutes (30).

5.  Dispositif selon la revendication 4, dans lequel les moyens de logique (28) permettant de fournir la sortie d'impulsions synchronisées à porte (52, 74) comprend :

    un registre de décalage de données (96) ainsi que des moyens de décalage des impulsions synchronisées de données (72) à travers une pluralité d'emplacements de données (6-0) dans le registre de décalage des données (96) en réponse à la sortie d'horloge (50) et permettant de fournir une sortie d'un registre de décalage des données (104) comprenant des impulsions de données synchronisées décalées ;
    un registre de décalage de la polarité (98) ainsi que des moyens permettant le décalage de la sortie de polarité synchronisée (46, 70) à travers une pluralité d'emplacements de données (6-0) dans le registre de décalage de la polarité (98) en réponse à la sortie d'horloge (50) ; et
    une porte de sortie (102) ainsi que des moyens (100) permettant de détecter le contenu de la pluralité d'emplacements de données (6-0) du registre de décalage des données (96) et la pluralité des emplacements de données (6-0) du registre de décalage de la polarité (98) et permettant de fournir un signal de validation (106) à une entrée de validation de la porte de sortie (102) lorsque la sortie du registre de décalage des données (104) représente l'occurrence de la dernière impulsion synchronisée de données au cours du cycle de polarité du signal de données brutes (30).

6. Dispositif selon la revendication 5 dans lequel le registre de décalage des données (96) comporte une pluralité d'emplacements de données ($A_{DS}1$, $A_{DS}2$.... $A_{DS}N$), le registre de décalage de la polarité (96) comporte une pluralité d'emplacements de données ($A_{PS}1$, $A_{PS}2$.... $A_{PS}N$), et le signal de validation (106) est basé sur la relation suivante :

$$\overline{Validation} = (A_{DS}1 \times A_{PS}1) + [A_{DS}2 \times (A_{PS}1 \times A_{PS}2)]$$

$$... + [A_{DS}N \times (A_{PS}1 \times A_{PS}2... \times A_{PS}N)]$$

Fig. 1

| | $A_6$ | $A_5$ | $A_4$ | $A_3$ | $A_2$ | $A_1$ | $A_0$ | |
|---|---|---|---|---|---|---|---|---|
| 96 | 1 | 0 | 1 | 0 | 0 | 0 | 1 | DATA OUT → |
| 98 | 1 | 1 | 0 | 1 | 1 | 1 | 0 | |

Fig. 7

Fig. 8

15

Fig. 2

EP 0 430 457 B1

*Fig. 3*

*Fig. 4*

EP 0 430 457 B1

48

50

D 6 $A_{96}$ 5 $A_{96}$ 4 $A_{96}$ 3 $A_{96}$ 2 $A_{96}$ 1 $A_{96}$ 0 $A_{96}$ 96

CK 104

102 52

110

112

SHIFT LOGIC 100 106

108 D Q

CK 6 $A_{98}$ 5 $A_{98}$ 4 $A_{98}$ 3 $A_{98}$ 2 $A_{98}$ 1 $A_{98}$ 0 $A_{98}$ 98

D

*Fig. 5*

114

116

118

*Fig. 6*

Fig. 9